Europäisches Patentamt

European Patent Office

Office européen des brevets

(11) Numéro de publication : **0 044 777**
**B1**

(12) # FASCICULE DE BREVET EUROPÉEN

(45) Date de publication du fascicule du brevet :
20.02.85

(51) Int. Cl.⁴ : **G 01 C 23/00**, G 05 D 1/06

(21) Numéro de dépôt : **81401131.8**

(22) Date de dépôt : **16.07.81**

(54) **Dispositif d'assistance au pilotage d'un véhicule aérien.**

(30) Priorité : 23.07.80 FR 8016234

(43) Date de publication de la demande :
27.01.82 Bulletin 82/04

(45) Mention de la délivrance du brevet :
20.02.85 Bulletin 85/08

(84) Etats contractants désignés :
DE FR GB NL SE

(56) Documents cités :
FR-A- 2 128 387
FR-A- 2 334 141
FR-A- 2 389 535
GB-A-   819 456

(73) Titulaire : **AVIONS MARCEL DASSAULT-BREGUET AVIATION**
33, Rue du Professeur Pauchet
F-92420 VAUCRESSON (FR)

**THOMSON-CSF**
173, Boulevard Haussmann
F-75379 Paris Cedex 08 (FR)

(72) Inventeur : **Georges, Jean-François Marie**
19, rue Desvallières
F-92410 Ville D'Avray (FR)
Inventeur : **Parus, Roger**
126, Rue de Paris
F-78470 Saint-Rémy-Lès-Chevreuse (FR)

(74) Mandataire : **De Boisse, Louis**
37, Avenue Franklin D. Roosevelt
F-75008 Paris (FR)

EP 0 044 777 B1

**Description**

La présente invention concerne un dispositif d'assistance au pilotage, ou à la simulation du pilotage, d'un véhicule aérien, notamment d'un avion.

On connaît déjà différents types de dispositifs d'assistance au pilotage d'un avion, comportant un élément d'affichage et des moyens pour y faire apparaître des symboles représentatifs de certaines caractéristiques du vol de l'avion et de son environnement. La plupart de ces dispositifs connus sont cependant assez sommaires et peu satisfaisants. Dans la plupart des réalisations connues, c'est l'axe longitudinal de l'avion qui est pris en considération pour son guidage, et qui est représenté par exemple par une croix ou un autre symbole sur l'écran d'affichage, et, en cas de pilotage manuel, le pilote doit s'efforcer d'obtenir un rapprochement relatif de cette croix et d'autres éléments ou symboles affichés, représentant certains éléments caractéristiques du sol. Une telle assistance au pilotage présente l'inconvénient lié au fait que la direction instantanée du vol de l'avion coïncide rarement avec celle de son axe longitudinal, si bien que, pour suivre une trajectoire déterminée, le pilote est obligé de tenir compte en particulier de la dérive de l'avion et de son incidence. On comprend ainsi le caractère insuffisant, et peu sûr, de ces dispositifs d'assistance au pilotage, antérieurement connus.

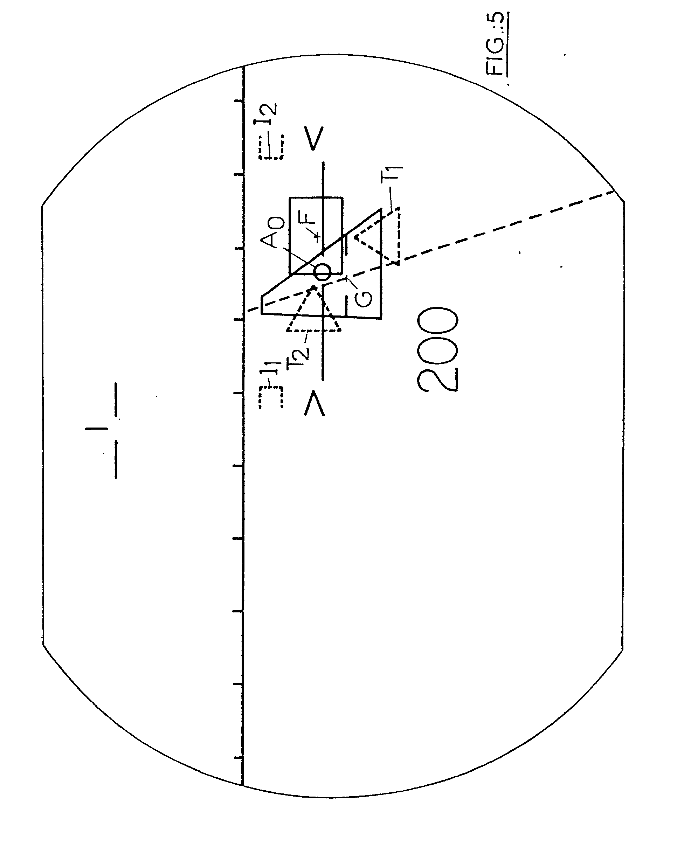

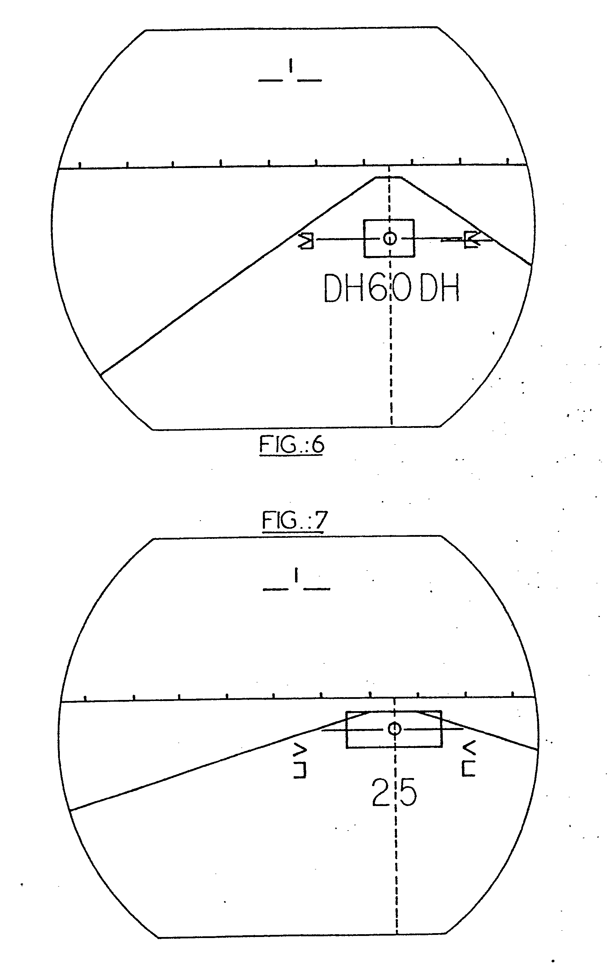

La demande de brevet FR-A-2 389 535 de la Société Française d'Equipements Pour La Navigation Aérienne, décrit notamment un dispositif de pilotage par projection d'objets lumineux ; ce dispositif comporte un élément d'affichage avec écran d'affichage et des moyens de génération de symboles pour y faire apparaître des symboles (par exemple 7, 8 et 9 sur la figure 4 de cette demande de brevet), représentatifs de certaines caractéristiques du vol de l'avion et de son environnement ; ces moyens de génération de symboles comportent des moyens pour faire apparaître un symbole (par exemple 6 sur la figure 4), caractéristique du véhicule aérien, près d'un point de l'écran d'affichage. Comme, cependant, le symbole caractéristique du véhicule aérien qui apparaît sur l'écran d'affichage est fixe relativement à l'avion, donc par rapport à l'écran d'affichage, il serait mal commode de l'utiliser pour le guidage de la trajectoire de l'avion. C'est la raison pour laquelle le dispositif de pilotage décrit dans cette demande de brevet prévoit également d'afficher des repères mobiles (par exemple 7, 8 et 9 sur les figures 4 et 4 bis, 13 à 18 sur les figures 6 à 8), qui sont respectivement représentatifs de certaines caractéristiques du vol de l'avion ; comme, cependant, ces repères sont mobiles par rapport au symbole caractéristique de l'avion lui-même, qui est fixe, la lecture et la compréhension de l'affichage en vue du guidage de l'avion, sont relativement complexes et d'un emploi malaisé ; de cette complexité peuvent résulter des erreurs de pilotage et, en tout cas, une fatigue rapide du pilote.

Le dispositif d'assistance au pilotage, ou à la simulation du pilotage, d'un véhicule aérien, monté sur ledit véhicule aérien, comporte également un élément d'affichage avec écran d'affichage et des moyens de génération de symboles pour y faire apparaître des symboles représentatifs de certaines caractéristiques du vol de l'avion et de son environnement, ces moyens de génération de symboles comportant des moyens pour faire apparaître un symbole caractéristique du véhicule aérien près d'un point de l'écran d'affichage ; le dispositif selon la présente invention est caractérisé en ce que lesdits moyens pour faire apparaître le symbole caractéristique du véhicule aérien sont tels que l'abscisse (x) et l'ordonnée (z) dudit point de l'écran, par rapport à deux axes rectangulaires (O'x, O'z), sont respectivement proportionnelles à la dérivé $\delta$, et à la pente par rapport au sol, $\gamma_S$, de la trajectoire du véhicule, $\delta$ et $\gamma_S$ étant fournies par un générateur de $\delta$ et $\gamma_S$, monté sur le véhicule aérien, les moyens de génération de symboles comportant en outre des moyens pour faire apparaître un symbole de guidage de la trajectoire du véhicule aérien.

On rappelle que la dérive $\delta$ d'un véhicule aérien en vol est un angle correspondant à la différence entre sa « route » et son « cap », la direction de sa route pouvant être définie par la composante horizontale de la vitesse du véhicule par rapport au sol ; d'autre part, la pente par rapport au sol, $\gamma_S$ de la trajectoire d'un véhicule aérien peut être définie par le rapport de la composante verticale à la composante horizontale de sa vitesse par rapport au sol.

Comme le dispositif d'assistance au pilotage selon la présente invention fait apparaître, sur l'écran d'affichage, un symbole caractéristique du véhicule aérien, qui est mobile sur ledit écran, puisque les coordonnées de ce symbole sont variables, respectivement comme $\delta$ et $\gamma_S$, et que le dispositif selon l'invention comporte en outre des moyens pour faire apparaître un symbole de guidage de la trajectoire de l'avion, on comprend que le pilote peut aisément piloter le véhicule aérien de manière que son symbole caractéristique, affiché sur l'écran, s'écarte peu du symbole de guidage, et que, en outre, l'affichage ainsi produit est toujours très simple et très lisible, ce qui réduit considérablement les risques d'erreurs de pilotage et évite de fatiguer rapidement le pilote.

Sur les dispositifs antérieurs d'assistance au pilotage, qui ont été mentionnés en premier, celui selon la présente invention offre différents avantages très importants, notamment : comme la position du symbole caractéristique de l'avion, qui est affiché, dépend effectivement de la direction de la vitesse de l'avion par rapport au sol, par l'intermédiaire de $\delta$ et de $\gamma_S$, et non pas de l'orientation actuelle de l'axe longitudinal de l'avion, qui peut différer de façon importante de la direction de sa vitesse, l'emploi de ce symbole caractéristique en association avec le symbole de guidage de la trajectoire est beaucoup plus aisé et permet une assistance au pilotage, beaucoup plus efficace, dans la mesure où le pilote peut prendre en compte directement, pour ses manœuvres de pilotage, le symbole de l'avion, sans avoir à effectuer mentalement des corrections pour tenir compte de l'écart entre, d'une part, la direction longitudinale de l'avion, et, d'autre part, celle de sa vitesse par rapport au sol. Par ailleurs, au lieu d'avoir à rapprocher de façon très précise le point central de la croix symbolisant l'avion, avec d'autres éléments affichés, également ponctuels, comme dans le cas des dispositifs antérieurement connus d'assistance au pilotage, le pilote d'un avion équipé du dispositif d'assistance selon la présente invention a pour seule tâche, en cas de pilotage manuel, de maintenir le symbole de l'avion à l'intérieur de la fenêtre rectangulaire de guidage de sa trajectoire, ce qui nécessite des manœuvres beaucoup plus simples et beaucoup moins critiques, et exige donc du pilote une attention beaucoup moins soutenue. Ces deux avantages du dispositif d'assistance selon la présente invention contribuent donc considérablement à faciliter le pilotage manuel de l'avion.

Dans une forme de réalisation préférée du dispositif selon la présente invention, les coordonnées du symbole de l'avion, qui sont respectivement proportionnelles à la dérive, $\delta$, et à la pente par rapport au sol, $\gamma_S$, de la trajectoire de l'avion, sont fournies par une centrale à inertie montée sur l'avion. Des moyens sont en outre prévus pour afficher, au voisinage du symbole de l'avion, au moins un symbole d'incidence, dont la différence d'ordonnée avec le symbole de l'avion est égale à $K \cdot \Delta\alpha$, K étant un coefficient de proportionnalité et $\Delta\alpha$, l'écart entre l'incidence de l'avion et l'incidence correspondant à la vitesse de référence choisie, ainsi qu'au moins un symbole de pente potentielle, dont l'ordonnée est proportionnelle à

$$\gamma_P = \gamma_S + (1/g) \cdot (dV_S/dt)$$

g étant l'intensité de la pesanteur. D'autre part, des moyens peuvent être, de préférence, également prévus pour afficher des repères fixes, matérialisant respectivement les axes de tangage et de lacet de l'avion, ainsi que des moyens pour afficher l'axe des dérives $\delta$ sous la forme d'une ligne mobile d'horizon, de préférence graduée en unités angulaires de cap, cette ligne d'horizon étant définie par le fait que sa pente avec l'axe de tangage est égale à l'inclinaison latérale de l'avion, et que sa distance au point de convergence desdits repères fixes est proportionnelle à l'inclinaison longitudinale de l'avion. Eventuellement, des moyens peuvent être aussi prévus pour afficher une image évolutive et réaliste d'une piste d'atterrissage, telle qu'elle serait vue par le pilote de l'avion.

Cette forme de réalisation préférée du dispositif d'assistance au pilotage selon la présente invention offre des avantages décisifs sur les dispositifs d'assistance du même genre, qui ont été réalisés jusqu'à présent. Pour amener l'avion à suivre avec une précision suffisante la trajectoire initialement choisie, et matérialisée à chaque instant sur l'écran d'affichage par la fenêtre rectangulaire de guidage, il suffit que le pilote, d'une part, maintienne le symbole de l'avion à l'intérieur de ladite fenêtre de guidage, en agissant sur les commandes de profondeur et de gauchissement, et qu'il maintienne d'autre part le ou les symboles de pente potentielle au même niveau que le ou les symboles d'incidence, en agissant sur les organes de réglage manuel de la poussée des réacteurs de l'avion. A tout instant, l'écran d'affichage présente au pilote :

1. Des informations précises sur le vol de l'avion : son inclinaison latérale, autour de l'axe de roulis, est visualisée par l'angle que fait actuellement la ligne mobile d'horizon avec les repères fixes matérialisant les axes de l'avion ; la distance entre ces repères fixes et ladite ligne mobile d'horizon visualise son inclinaison longitudinale ; les positions relatives des repères fixes affichés, d'une part, du symbole de l'avion, d'autre part, permettent de lire la dérive $\delta$ sur l'échelle graduée portée par la ligne mobile d'horizon ; ceci permet notamment une assistance aisée du guidage de la trajectoire de l'avion suivant un cap constant, en utilisant une fenêtre de guidage dont l'ordonnée du centre est maintenue fixe sur ladite ligne d'horizon ; de même, la pente de l'avion par rapport au sol, $\gamma_S$, peut être déduite de la distance entre le symbole avion et la ligne d'horizon, un guidage à pente constante pouvant par suite être également obtenu en utilisant une fenêtre de guidage dont l'ordonnée du centre, par rapport à la ligne d'horizon, est elle-même maintenue fixe ; en particulier, le vol horizontal est obtenu en maintenant le symbole de l'avion constamment sur ladite ligne d'horizon.

2. Des informations figuratives sur l'environnement, en particulier terrestre, de l'avion, ces informations figuratives étant suffisamment réalistes lorsqu'il s'agit notamment d'une image évolutive d'une piste d'atterrissage réelle, pour que le pilote puisse l'utiliser au cours des phases d'approche et d'atterrissage de l'avion sur la piste correspondante.

L'exploitation de ces différentes informations par le pilote est particulièrement aisée lorsque l'élément d'affichage du dispositif selon la présente invention est un tube à faisceau cathodique ; dans ce cas, de préférence, l'élément d'affichage, notamment le tube cathodique, est placé au poste de pilotage, et des moyens optiques connus sont prévus pour projeter son écran devant les yeux du pilote dans une position telle que la ligne d'horizon mobile, et aussi, par exemple, l'image évolutive de la piste, coïncident sensiblement avec l'horizon et avec la piste que le pilote voit à travers le pare-brise de l'avion. Cette dernière disposition est particulièrement avantageuse puisqu'elle autorise le pilotage dit « tête haute » ; dans ce cas, l'image présentée aux yeux du pilote, soit, en cas de bonne visibilité, se superpose presque parfaitement avec l'environnement terrestre, visible à travers le pare-brise, soit, en l'absence de visibilité, se substitue à cet environnement lui-même.

**0 044 777**

A titre d'exemple, on a décrit ci-dessous et illustré schématiquement aux dessins annexés une forme de réalisation d'un dispositif d'assistance au pilotage d'un avion selon la présente invention, dans le cas particulier où cette forme de réalisation est utilisée pour l'assistance à l'atterrissage sur une piste équipée du système I.L.S. (Instrument Landing System) ou d'un système équivalent.

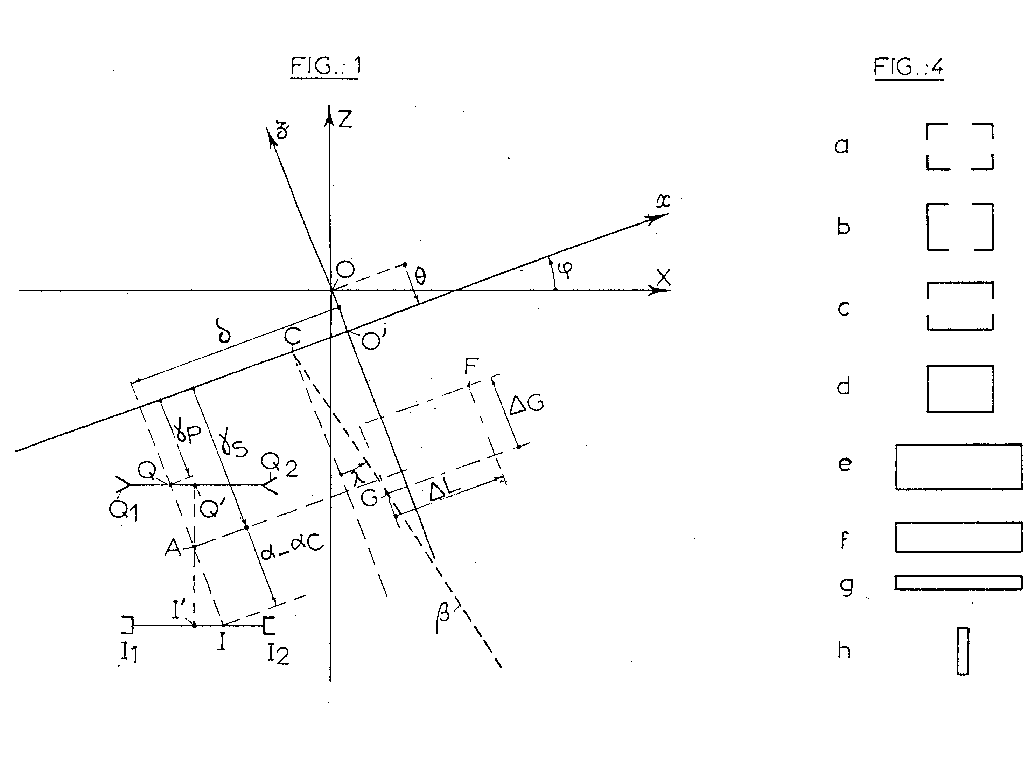

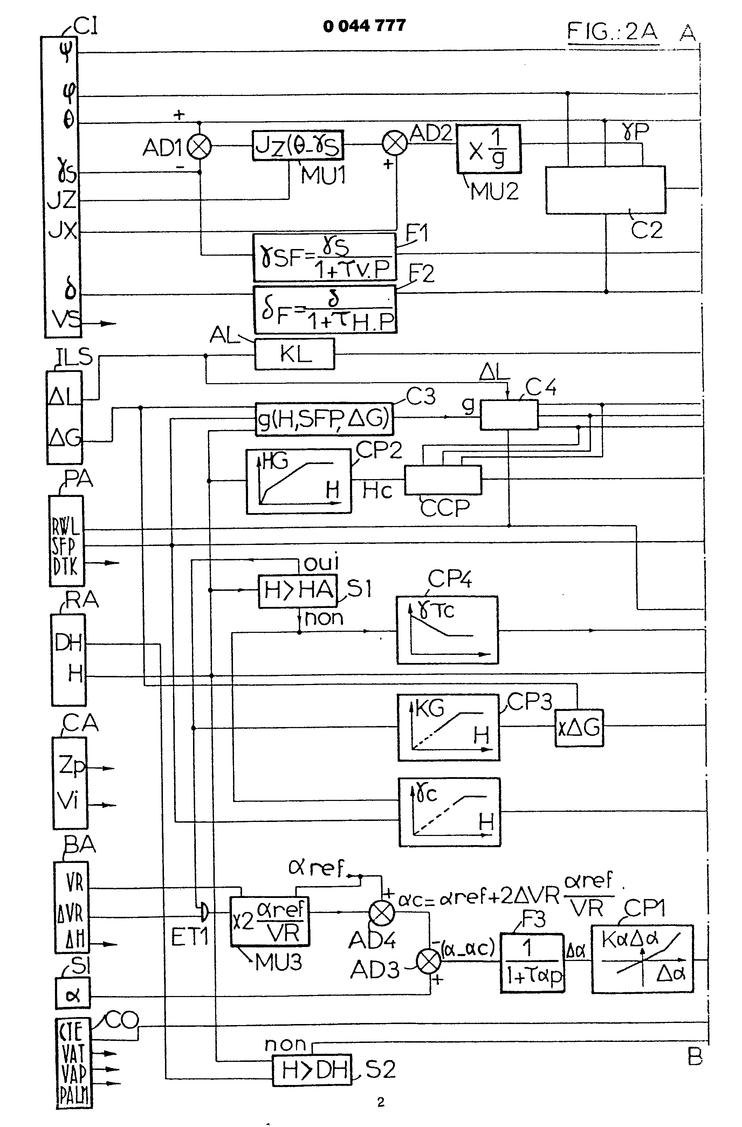

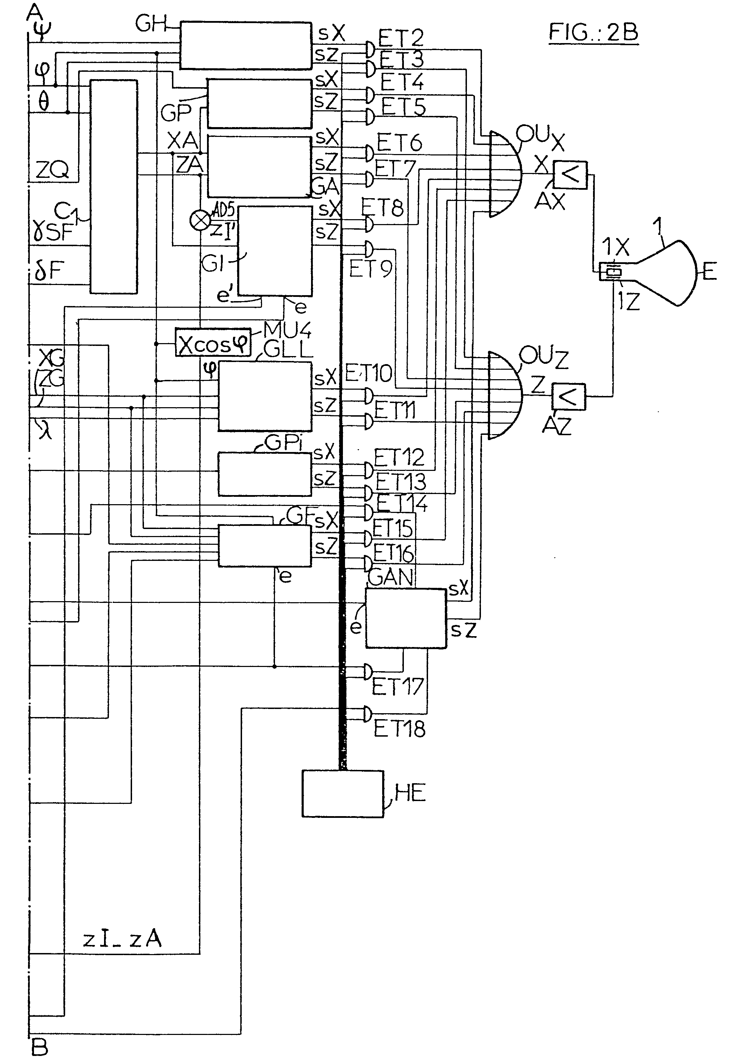

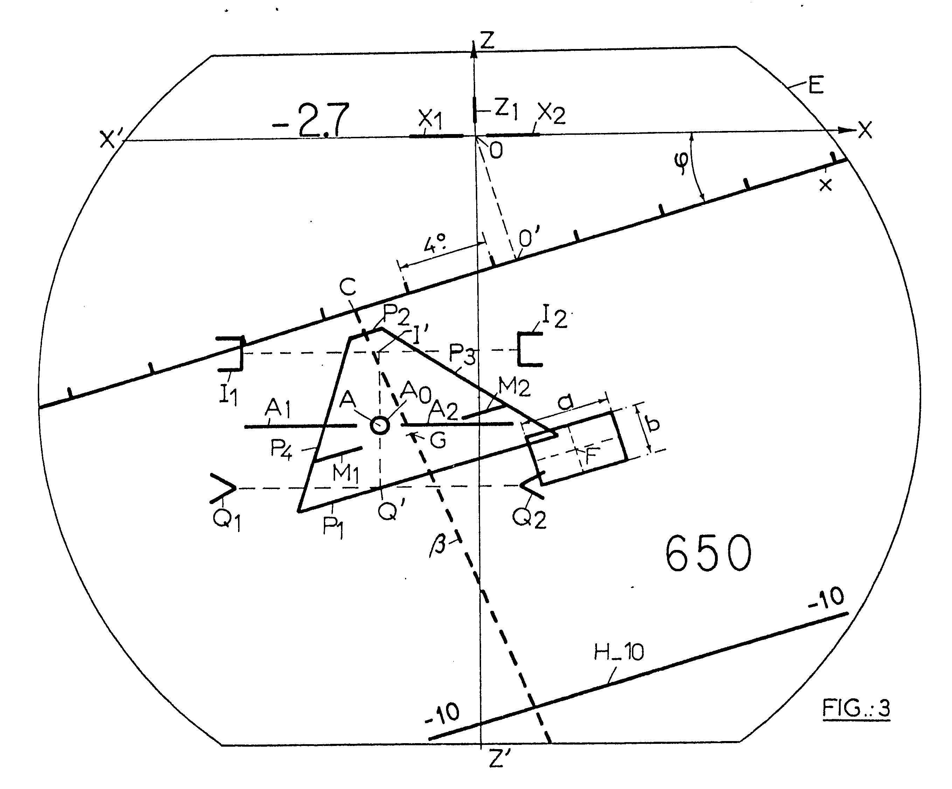

La figure 1 est un schéma illustrant les positions relatives des principaux symboles qui sont formés sur l'écran d'affichage du dispositif d'assistance au pilotage selon la présente invention ; les figures 2A et 2B représentent respectivement deux parties du schéma par blocs de la forme de réalisation mentionnée du dispositif selon la présente invention ; la figure 3 représente l'écran d'affichage associé au dispositif selon les figures 2A et 2B, pour un choix arbitraire, mais avantageux, des différents symboles caractéristiques ; la figure 4 montre les différentes formes que peut prendre la fenêtre rectangulaire de guidage de la trajectoire de l'avion dans différentes conditions de vol ; la figure 5 représente l'écran d'affichage et les symboles qui y apparaissent lors du vol d'approche d'une piste d'atterrissage équipée du système I.L.S. ; les figures 6 à 10 représentent respectivement les différents aspects de l'écran d'affichage, correspondant aux phases successives de l'atterrissage sur une piste équipée du système I.L.S. ; la figure 11 représente l'aspect de l'écran d'affichage dans le cas où une procédure d'atterrissage n'a pas abouti et a dû être suivie par une remise des gaz.

Le montage des figures 2A et 2B est conçu de façon à faire apparaître sur l'écran E d'un tube à faisceau cathodique 1 certains au moins des symboles qui sont présentés sur la figure 3 par des traits forts :

1. Des repères fixes, notamment des traits $X_1$ et $X_2$, matérialisant l'axe de tangage X'-X de l'avion, et au moins un repère fixe, notamment un trait $Z_1$, matérialisant son axe de lacet Z-Z' ; le point de convergence O des repères $X_1$-$X_2$ et $Z_1$ correspond donc au point de concours des axes de tangage et de lacet de l'avion, c'est-à-dire son centre de gravité ; c'est un point fixe, qui constitue l'origine des axes rectangulaires X-X' et Z-Z', suivant lesquels sont repérés l'abscisse X et l'ordonnée Z de chaque point de l'écran d'affichage E.

2. Une ligne mobile d'horizon, x, que des traits perpendiculaires à cette ligne graduent en unités angulaires de cap, l'intervalle entre deux traits successifs de cette graduation étant par exemple de deux degrés ; cette ligne d'horizon x est déterminée par le fait que sa pente avec la ligne X'-X, matérialisant l'axe de tangage de l'avion, est égale à l'inclinaison latérale, $\varphi$, de l'avion, et que sa distance $\overline{O\text{-}O'}$ au point O est proportionnelle à l'inclinaison longitudinale, ou assiette, $\theta$, de l'avion (voir aussi la figure 1).

3. Un symbole caractéristique de l'avion, Ao, qui peut être par exemple un petit polygone ou un petit cercle centré au point A, dont l'abscisse et l'ordonnée par rapport à l'axe O'x et à l'axe perpendiculaire O'z (figure 1), sont respectivement proportionnelles à la dérive $\delta$, et à la pente par rapport au sol, $\gamma_S$, de la trajectoire de l'avion à l'instant considéré ; dans cette forme de réalisation, le symbole de l'avion Ao est complété par deux traits $A_1$-$A_2$ qui l'encadrent, et qui, en toutes circonstances, restent parallèles à l'axe X'-X.

4. Deux symboles d'incidence, $I_1$-$I_2$, qui apparaissent symétriquement à un point I' de l'écran, de même abscisse $X_{I'} = X_A$ que le centre A du symbole de l'avion Ao. Comme le montre la figure 1, le point I' a la même ordonnée $Z_{I'} = Z_I$ qu'un point I, se trouvant sur une parallèle à l'axe O'z passant par le point A, et choisi de façon que son ordonnée par rapport à l'axe O'z, $z_I$, diffère de celle, $z_A$, du point A, d'une quantité proportionnelle à $\Delta\alpha = \alpha - \alpha_c$, qui est l'écart entre l'incidence $\alpha$ de l'avion, et l'incidence, $\alpha_c$, correspondant à la vitesse de référence choisie pour l'avion sur sa trajectoire (bien entendu les points I' et I sont confondus en l'absence d'inclinaison latérale de l'avion : $\varphi = O$) ; dans l'exemple de réalisation considéré, les deux symboles $I_1$-$I_2$ sont formés par des petits rectangles ouverts du côté opposé au point I' ; leurs côtés sont respectivement parallèles aux axes OX-OZ, et leurs centres respectifs (non représentés) sont disposés symétriquement au point I', sur une parallèle à l'axe OX.

5. Deux symboles de pente potentielle $Q_1$-$Q_2$, constitués par exemple par deux pointes de flèche, disposées symétriquement par rapport à un point Q' de même abscisse $X_{Q'} = X_A$ que le point A, la droite $Q_1$-$Q_2$ étant également parallèle à l'axe OX ; comme visible sur la figure 1, le point Q' a, suivant l'axe OZ, la même ordonnée qu'un point Q de la droite AI, parallèle à l'axe O'z, dont l'ordonnée suivant ce dernier axe est proportionnelle à

$$\gamma_P = \gamma_S + 1/g \cdot (dV_S/dt)$$

$V_S$ étant la vitesse de l'avion par rapport au sol ; dans ce cas également, les points Q et Q' ne sont confondus qu'en l'absence d'inclinaison latérale de l'avion ($\varphi = O$).

6. Un trapèze $P_1$-$P_4$, dont les côtés $P_1$, $P_2$ sont toujours parallèles à la ligne d'horizon O'x, les longueurs de ses quatre côtés étant choisies de telle façon que, à un instant donné, ce trapèze constitue une image réaliste d'une piste d'atterrissage telle qu'elle serait vue au même instant par le pilote de l'avion en cas de visibilité normale ; bien entendu, cette image évolue au cours du vol de manière à rester toujours réaliste, comme on le précisera ultérieurement.

7. L'axe de symétrie longitudinal de la piste, $\beta$, est affiché par exemple sous la forme d'une ligne de tirets, sur laquelle sont centrés les milieux des côtés $P_1$-$P_2$ de l'image de ladite piste ; dans l'exemple illustré, cet axe $\beta$ est prolongé en dehors de la piste $P_1$-$P_4$, aussi bien jusqu'à la limite inférieure de l'écran d'affichage E que jusqu'à son point d'intersection C, avec la ligne d'horizon O'x ; l'orientation de

4

cet axe β est définie par l'angle λ (figure 1) qu'il fait avec la perpendiculaire en C à l'axe O'x ; en fait, comme on l'expliquera ultérieurement, la position d'affichage de cet axe β est déduite notamment de l'écart dit « localizer », ΔL, et de l'écart dit « glide », ΔG, qui sont fournis l'un et l'autre par un récepteur I.L.S. de l'avion, si bien que cet axe β correspond sensiblement à la trace, sur le sol, du plan vertical d'émission du faisceau I.L.S. dit « glide » (ΔL = O), et qu'il peut donc différer légèrement de l'axe de symétrie géométrique, précédemment défini.

8. Le point d'impact idéal, G, sur l'axe β de la piste $P_1$-$P_4$, est repéré par deux traits ou marqueurs, $M_1$-$M_2$, qui sont affichés parallèlement aux côtés $P_1$-$P_2$ de la piste, à partir de ses côtés $P_3$-$P_4$, de manière à s'étendre de préférence chacun sur un quart de la largeur apparente de la piste au niveau du point G.

9. Le centre, F, de la fenêtre rectangulaire de guidage pour l'atterrissage à l'aide du système I.L.S. a des coordonnées suivant les axes O'x-O'z, qui diffèrent respectivement de celles du point d'impact idéal, G, par rapport aux mêmes axes, de quantités respectivement proportionnelles aux écarts ΔL, ΔG, précédemment définis, et fournis par le récepteur I.L.S. de l'avion (voir la figure 1) ; comme le montre la figure 3, les deux paires de côtés de la fenêtre rectangulaire de guidage, de centre F, qui ont respectivement des longueurs a et b, sont respectivement parallèles aux axes O'x-O'z ; la forme et les dimensions de cette fenêtre de guidage, de centre F, peuvent évoluer au cours du vol de l'avion, comme on l'expliquera ultérieurement à l'aide de la figure 4.

10. L'axe O'z correspondant à la coordonnée angulaire θ, il est également possible d'afficher par exemple en traits pleins des parallèles à l'horizon mobile O'x, correspondant à des écarts angulaires algébriques, Δθ, de valeurs entières, par exemple Δθ = + 10° + 20°, − 10° − 20° ... etc. ; la figure 3 montre seulement la ligne $H_{-10}$, dont l'écart angulaire, − 10°, est affiché à chacune de ses extrémités proches des bords de l'écran E.

11. Des informations alpha-numériques peuvent être en outre affichées, de façon connue en soi, de préférence dans des zones marginales de l'écran, où elles ne risquent pas d'embrouiller l'affichage ; dans l'exemple considéré, de l'assistance à un atterrissage I.L.S., il est prévu, selon la présente invention, d'afficher, par exemple en haut et à gauche de l'écran E, la pente choisie pour l'approche de la piste d'atterrissage (S.F.P. = − 2,7 en degrés par exemple), en bas à droite de l'écran E, la hauteur radio-altimétrique de l'avion (H = 650 en pieds par exemple), ainsi que, à l'instant approprié, la « hauteur de décision », c'est-à-dire l'altitude de l'avion à laquelle le pilote doit décider de réaliser l'atterrissage ou d'y renoncer (voir l'information DH 60 DH sur la figure 6, qui correspond à une hauteur de décision de 60 pieds) ; cette énumération n'est pas limitative.

Sur la partie gauche de la figure 2A, on a représenté par des rectangles les différents capteurs dont est équipé l'avion, et qui fournissent sur leurs bornes de sortie des grandeurs électriques, par exemple analogiques, proportionnelles à des caractéristiques physiques de l'avion et de sa trajectoire, et indispensables au fonctionnement du dispositif d'assistance au pilotage selon la présente invention, tout au moins dans sa forme de réalisation considérée.

Parmi ces capteurs, la centrale à inertie, CI, fournit sur ses sorties, notamment le cap ψ suivi par l'avion, son inclinaison latérale ou roulis, φ, son inclinaison longitudinale ou tangage, θ, la pente de sa trajectoire par rapport au sol, $γ_s$, les composantes verticale, Jz, et horizontale, Jx, de son accélération J, sa dérive δ, sa vitesse par rapport au sol $V_s$. Le récepteur I.L.S. de l'avion fournit, comme on l'a déjà indiqué, les écarts « localizer », ΔL, et « glide », ΔG. Un poste d'affichage, PA, placé à portée du pilote de l'avion, permet à celui-ci d'entrer manuellement, dans le calculateur qui sera décrit ultérieurement, la longueur de la piste d'atterrissage, RWL, la pente choisie pour le vol d'approche, SFP, et la route désirée, correspondante, DTK. Un radio-altimètre, RA, fournit la hauteur radioaltimétrique, H, ainsi que la hauteur de décision, DH. Une centrale aérodynamique CA fournit l'altitude Zp et la vitesse indiquée de l'avion $V_i$, c'est-à-dire sa vitesse par rapport à l'air ambiant ; ces deux dernières informations ne sont cependant pas utilisées dans l'exemple d'atterrissage I.L.S. qui sera décrit ultérieurement, mais seulement pour d'autres modalités de vol. Un boîtier d'affichage de modes, BA, placé également à portée du pilote, lui permet d'entrer dans le calculateur mentionné un écart, $ΔV_R$, par rapport à la vitesse de référence choisie $V_R$, cet écart étant lui-même sélectionné par exemple pour tenir compte de la vitesse du vent pendant l'approche de la piste d'atterrissage ; le même boîtier permet d'entrer un écart d'altitude ΔH, nécessaire pour l'assistance à d'autres phases de vol. Une sonde d'incidence SI fournit l'incidence α de l'avion. Enfin, différents capteurs, groupés dans le bloc CO, peuvent fournir, pour l'assistance à certaines phases du vol, des informations relatives à la position du train d'atterrissage (CTE si le train est enfoncé), à la position des volets (VAP s'ils sont sortis en position d'approche, VAT, s'ils sont sortis en position d'atterrissage), et à la position du « palm Switch », c'est-à-dire du commutateur manuel de commande des gaz placé à la portée du pilote (PALM si ce commutateur est enfoncé).

Sur la partie droite de la figure 2B, on a représenté l'élément d'affichage sous la forme d'un tube à faisceau cathodique 1, sur l'écran, E, duquel les différents symboles précédemment décrits à l'aide de la figure 3 peuvent être affichés dans des positions définies par leurs coordonnées respectives, X et Z, par rapport aux axes définis par les repères fixes $X_1$-$X_2$ et $Z_1$ (figure 3), coordonnées auxquelles sont respectivement proportionnelles les tensions appliquées aux organes de déflexion horizontale, 1X, et verticale, 1Z, du tube 1. Entre les sorties des sources d'informations CI à BA précédemment définies, d'une part, et les organes de déflexion, 1X, 1Z, du tube à faisceau cathodique, 1, d'autre part, est intercalé

5

un calculateur, qui est susceptible de différentes formes de réalisation ; on a représenté sur les figures 2A-2B et l'on va décrire une forme de réalisation purement analogique d'un tel calculateur ; il est cependant bien évident qu'il serait possible d'y substituer un calculateur numérique, de type universel ou spécialisé, convenablement programmé.

Le calculateur analogique illustré sur les figures 2A-2B comprend les circuits suivants :

Un générateur de ligne d'horizon GH reçoit de la centrale à inertie CI des grandeurs électriques proportionnelles aux paramètres angulaires $\psi$, $\varphi$, $\delta$ de l'avion et produit, par exemple en permanence, sur ses deux sorties sX-sZ, des tensions électriques qui, lorsqu'elles sont appliquées comme on le précisera ultérieurement, aux organes de déflexion 1X-1Z du tube à faisceau cathodique 1, produisent l'affichage de la ligne d'horizon mobile O'x (figure 3) et de ses traits de graduation en degrés, l'origine de cette échelle angulaire étant fixée, par le générateur GH, à partir de l'information de cap, $\psi$. Les coordonnées du symbole de l'avion par rapport aux axes fixes OX-OZ, qui seront désignées dans la suite par $X_A$, $Z_A$, sont déterminées par un circuit de calcul $C_1$ à partir des informations $\varphi$, $\theta$, $\gamma_S$ et $\delta$, fournies par la centrale à inertie CI, ledit circuit de calcul $C_1$ étant réalisé, de façon connue en soi, de manière à calculer la transformation de coordonnées, correspondant aux équations suivantes, qui peuvent être lues sur la figure 1 :

$$A \begin{cases} X_A = \delta \cos \varphi + (\theta + \gamma_S) \sin \varphi \\ Z_A = \delta \sin \varphi + (\theta - \gamma_S) \cos \varphi. \end{cases}$$

En fait, avant d'être transmises aux entrées correspondantes du circuit de calcul $C_1$, les grandeurs $\gamma_S$ et $\delta$ sont « lissées » respectivement dans deux filtres $F_1$, $F_2$, ayant les fonctions de transfert suivantes :

$$Tr \begin{cases} \gamma_{SF} = \gamma_S/(1 + \tau_V \cdot p) \text{ (p = opérateur de Laplace)} \\ \delta_F = \delta/(1 + \tau_H \cdot p) \end{cases}$$

$\tau_V$ et $\tau_H$ étant des contantes de filtrage appropriées.

Les coordonnées $X_A$, $Z_A$ fournies par les sorties du circuit de calcul $C_1$ sont transmises à un générateur de symbole avion, GA, sur les sorties, sX et sZ, duquel apparaissent, par exemple en permanence, des tensions électriques qui, si elles étaient appliquées directement aux organes de déflexion 1X, 1Z du tube 1, produiraient l'affichage, sur son écran E du symbole Ao (figure 3), c'est-à-dire par exemple un petit polygone ou un petit cercle centré au point A de l'écran de coordonnées XA, ZA.

Un circuit additionneur $AD_1$ forme la différence $(\theta - \gamma_S)$, qui est ensuite envoyée, en parallèle avec la composante verticale, $J_z$, de l'accélération de l'avion, dans un circuit de multiplication $MU_1$, qui effectue le produit $J_z x (\theta - \gamma_S)$ ; un second circuit additionneur $AD_2$, qui reçoit la composante horizontale, $J_x$, de l'accélération, et un second circuit multiplicateur $MU_2$ à facteur constant, égal à 1/g, permet de calculer la pente potentielle par l'équation :

$$\gamma_P = [J_z (\theta - \gamma_S) + J_x]/g.$$

Un circuit de calcul $C_2$, recevant les grandeurs $\varphi$, $\theta$, $\gamma_P$, en provenance de la sortie du multiplicateur $MU_2$, et $\delta_F$, détermine l'ordonnée du point Q (figure 1), en appliquant l'équation de transformation de coordonnées suivante, qui est lisible sur ladite figure 1 :

$$\delta_Q = \delta \sin \varphi + (\theta - \gamma_P) \cos \varphi.$$

Comme l'abscisse et l'ordonnée, par rapport aux axes fixes OX-OZ, du centre de symétrie, Q', des symboles de pente potentielle, $Q_1$-$Q_2$, sont respectivement égales à l'abscisse du point A et à l'ordonnée du point Q (figure 1), il suffit, pour transmettre les coordonnées du point Q' à un générateur de symbole de pente potentielle, GP, d'appliquer à ses entrées des tensions électriques proportionnelles respectivement à $X_A$ et $Z_Q$ ; ce générateur GP est réalisé, de façon connue en soi, de manière à faire apparaître sur ses deux sorties $s_X$-$s_Z$, par exemple de façon permanente, deux tensions électriques telles que, si elles étaient appliquées aux organes de déflexion du tube 1, elles feraient apparaître sur son écran les deux symboles $Q_1$-$Q_2$ (figures 1 et 3) dans des positions symétriques par rapport à Q'.

Pour produire les symboles d'incidence $I_1$, $I_2$ (figure 3), il faut évidemment former la différence $(\alpha - \alpha_c)$ entre l'incidence, $\alpha$, de l'avion, fournie par la sonde d'incidence SI, d'une part, et d'autre part, l'incidence de consigne, $\alpha_c$, dans un circuit additionneur $AD_3$. On rappelle que l'incidence de consigne, $\alpha_c$, dépend de la vitesse de référence, $V_R$, choisie pour le vol d'approche de l'avion ; cependant, le boîtier d'affichage des modes, BA, permet au pilote, ainsi qu'on l'a déjà indiqué, d'introduire un écart par rapport à la vitesse de référence, $\Delta V_R$, par exemple pour tenir compte de la vitesse du vent, ceci pendant les phases de l'atterrissage précédant la phase finale, au cours de laquelle, parvenu à une altitude déterminée, $H_A$, par exemple de 70 pieds, l'avion doit quitter sa trajectoire linéaire de descente vers la piste, pour amorcer un « arrondi », qui doit l'amener au point d'atterrissage. A cet effet, l'information $\Delta V_R$, provenant du boîtier BA, est transmise à une première entrée d'un circuit logique $ET_1$, dont l'autre entrée reçoit un signal d'un circuit à seuil ou d'un comparateur, $S_1$, dans le cas seulement où la hauteur radio-altimétrique, H, fournie par le radio-altimètre, RA, est supérieure à $H_A$. La sortie du circuit logique $ET_1$ est reliée à l'entrée d'un circuit multiplicateur $MU_3$ qui, pour multiplier $\Delta V_R$ par le facteur $2\alpha_{ref}/V_R$ ($\alpha_{ref}$ étant l'incidence de référence de l'approche), reçoit sur ses deux autres entrées, respectivement la vitesse de référence choisie $V_R$ et l'incidence de référence $\alpha_{ref}$. Cette dernière quantité est également transmise, en parallèle avec la tension de sortie du circuit multiplicateur $MU_3$, aux entrées d'un circuit d'addition $AD_4$, dont la sortie transmet au circuit d'addition $AD_3$, en parallèle avec l'incidence $\alpha$, une tension électrique proportionnelle à l'incidence de consigne :

$$\alpha_c = \alpha_{ref} + 2\ \Delta V_R \cdot (\alpha_{ref}/V_R).$$

La tension de sortie du circuit additionneur $AD_3$, qui est proportionnelle à $(\alpha - \alpha_c)$, est ensuite appliquée à l'entrée d'un circuit de filtrage $F_3$, dont la fonction de transfert correspond à

$$\Delta\alpha = (\alpha - \alpha_c)/(1 + \tau\alpha \cdot p),$$

dans laquelle $\tau\alpha$ est une constante de temps appropriée. La tension de sortie du filtre $F_3$, proportionnelle à $\Delta\alpha$, est ensuite appliquée à l'entrée d'un circuit de pondération $CP_1$, qui multiplie $\Delta\alpha$ par un coefficient de proportionnalité, K, variable de façon à augmenter avec $\Delta\alpha$, tout au moins au-dessus d'une certaine valeur de $\Delta\alpha$ ; dans la forme de réalisation considérée, ce coefficient de proportionnalité K peut prendre deux valeurs différentes, dont l'une, pour les valeurs positives, élevées, de $\Delta\alpha$, est notablement supérieure à l'autre, comme l'indique schématiquement la courbe de pondération représentée à l'intérieur du rectangle qui figure sur le circuit de pondération $CP_1$. La tension de sortie de ce dernier est proportionnelle à la différence des ordonnées, par rapport aux axes O'x-O'z (figure 1), des points I et A ; cette tension de sortie, proportionnelle à $(z_I\text{-}z_A)$ est transmise à une entrée d'un circuit de multiplication $MU_4$, dont l'autre entrée reçoit la tension électrique proportionnelle à l'angle de roulis $\varphi$, ce circuit multiplicateur $MU_4$ étant réalisé, de façon connue en soi, de manière à former le produit de sa tension d'entrée par $\cos\varphi$, de manière que sa tension de sortie soit elle-même proportionnelle à la différence, $(Z_{I'}\text{-}Z_A)$, des ordonnées, par rapport à l'axe fixe OZ, des points I' et A (figure 1). Cette tension de sortie est appliquée à une entrée d'un circuit additionneur, $AD_5$, dont l'autre entrée reçoit l'ordonnée $Z_A$, de la sortie correspondante du circuit de calcul $C_1$. L'autre sortie du circuit $C_1$ et celle du circuit additionneur $AD_5$ transmettent respectivement les coordonnées $X_{I'} = X_A$ et $Z_{I'}$ aux deux entrées d'un générateur de symbole d'incidence, GI ; celui-ci est réalisé de manière à produire sur ses deux sorties, sX, sZ, deux tensions électriques telles que, si elles étaient appliquées respectivement aux organes de déflexion du tube cathodique 1, elles feraient apparaître sur son écran E les deux symboles d'incidence $I_1$-$I_2$, dans des positions symétriques par rapport au point I', comme visible sur les figures 1 et 3.

D'autre part, l'écart « glide » $\Delta G$, l'information concernant la pente choisie, SFP, et la hauteur radio-altimétrique, H, sont transmises en parallèle aux entrées d'un circuit de calcul $C_3$, qui fait apparaître sur sa sortie une tension électrique proportionnelle à la distance instantanée, g, entre le centre de gravité de l'avion, d'une part, et le point d'impact idéal, G (figure 3), d'autre part. Cette distance g, qui est une fonction de $\Delta G$, SFP et H, est d'autre part transmise, en parallèle avec l'écart « localizer » $\Delta L$, à un autre circuit de calcul, $C_4$, sur les trois sorties duquel apparaissent respectivement les coordonnées, $X_G$, $Z_G$ du point G par rapport aux axes fixes, ainsi que l'angle, $\lambda$, que l'axe de la piste, $\beta$, fait avec la perpendiculaire à la ligne d'horizon O'x. Pour permettre la détermination de ces paramètres, l'information RWL est également transmise au circuit $C_4$ en provenance du poste d'affichage PA. Les trois grandeurs de sortie, $X_G$, $Z_G$ et $\lambda$, du circuit de calcul $C_4$, sont transmises, en parallèle avec l'angle de roulis $\varphi$, aux entrées d'un générateur d'axe du « localizer », GLL, dont les deux sorties, sX et sZ, produisent, par exemple de façon permanente, deux tensions électriques, qui, si elles étaient appliquées directement aux organes de déflexion du tube cathodique 1, feraient apparaître en tireté, sur son écran E, l'axe $\beta$ de la piste $P_1$-$P_4$.

Les quatre côtés, $P_1$-$P_4$, du trapèze évolutif, qui reproduit de façon réaliste la piste d'atterrissage, sont d'autre part affichés grâce à un circuit de conformation de la piste, CCP, qui reçoit, d'une part, les trois paramètres sortant du circuit de calcul $C_4$ et, d'autre part, une grandeur, $H_C$, dérivée de la hauteur altimétrique, H, par un autre circuit de pondération, $CP_2$, dont une forme possible de la courbe de transfert a été représentée schématiquement à l'intérieur du rectangle matérialisant le bloc $CP_2$. Le circuit de conformation de la piste CCP comporte d'autre part une pluralité de sorties, raccordées respectivement aux entrées d'un générateur de piste GPi ; ce dernier comporte deux sorties, sX, sZ, sur lesquelles apparaissent, par exemple en permanence, deux tensions électriques qui, si elles étaient appliquées directement aux organes de déflexion du tube cathodique 1, y feraient apparaître les quatre côtés du trapèze $P_1$-$P_4$ destiné à figurer la piste d'atterrissage et les deux marqueurs $M_1$, $M_2$.

La fenêtre de guidage pour l'atterrissage en I.L.S., de centre F, est elle-même produite par un générateur de fenêtre, GF, dont les différentes entrées reçoivent, en parallèle, l'angle de roulis $\varphi$, les coordonnées, $X_G$-$Z_G$, du point d'impact idéal, G, ainsi que les écarts $\Delta L$ et $\Delta G$ fournis par le récepteur I.L.S. ; un gain $K_L$ est cependant appliqué à l'écart $\Delta L$ par un amplificateur $A_L$ ; d'autre part, $\Delta G$ est lui-

même multiplié par un gain $K_G$, variable en fonction de la hauteur radio-altimétrique H, et produit par un circuit de pondération $CP_3$ ; l'entrée de ce dernier ne reçoit la hauteur radio-altimétrique H que de la sortie du circuit à seuil $S_1$, qui est activée seulement si H est supérieure à $H_A$ (hauteur d'arrondi). La hauteur radio-altimétrique, H, est d'autre part transmise directement à une autre entrée, e, du générateur de fenêtre GF, pour autoriser les changements de forme et dimensions de la fenêtre de guidage au cours des phases finales de l'atterrissage en I.L.S., comme on le décrira ultérieurement.

Un générateur de symboles alpha-numériques, GAN, comporte d'autre part au moins trois entrées qui reçoivent, par l'intermédiaire de circuits logiques du type ET, respectivement les informations SFP, H, ainsi qu'un signal provenant d'une sortie d'un circuit à seuil $S_2$, dont les entrées reçoivent en parallèle les informations H et DH du radio-altimètre, et dont la sortie considérée n'est activée que si H est inférieure ou égale à la hauteur de décision DH.

Comme visible sur la partie droite de la figure 2B, les sorties sX-sZ de chacun des générateurs de symboles GH, GP, GA, GI, GLL, GPi et GF, sont connectées respectivement aux premières entrées de circuits logiques $ET_2$ à $ET_{13}$ et $ET_{15}$, $ET_{16}$ ; trois autres circuits logiques $ET_{14}$, $ET_{17}$ et $ET_{18}$ reçoivent respectivement sur leurs premières entrées les informations SFP, H et le signal de sortie du circuit à seuil $S_2$ qui est produit lorsque H devient inférieur ou égal à la hauteur de décision DH. Les secondes entrées des différents circuits logiques sont connectées, par paires pour $ET_2$ à $ET_{13}$, et $ET_{15}$-$ET_{16}$, séparément pour $ET_{14}$, $ET_{17}$ et $ET_{18}$, en parallèle, respectivement aux neuf sorties d'une horloge électronique HE, sur lesquelles celle-ci produit successivement neuf brèves impulsions de déclenchement des portes logiques ET correspondantes, à des instants régulièrement espacés dans une période de récurrence, T, inférieure ou au plus égale à la durée de persistance des signaux affichés sur l'écran E du tube à faisceau cathodique 1. Comme les sorties des circuits logiques $ET_{14}$, $ET_{17}$ et $ET_{18}$ sont raccordées à des entrées distinctes de commande du générateur alpha-numérique GAN, celui-ci procède aux affichages successifs des paramètres SFP, H et DH, en des endroits de l'écran E qui ont été prédéterminés, par exemple de la façon précédemment indiquée. Comme, d'autre part, les sorties des circuits logiques $ET_2$ à $ET_{13}$ et $ET_{15}$, $ET_{16}$, ainsi que les sorties sX et sZ du générateur alpha-numérique GAN, sont regroupées par deux circuits logiques, $OU_X$ et $OU_Z$, dont les sorties respectives sont connectées aux organes de déflexion, 1X et 1Z, du tube à faisceau cathodique 1, à travers des amplificateurs appropriés, $A_X$ et $A_Z$, on comprend que, à chacun des cycles récurrents de l'horloge électronique HE, les deux portes logiques, par exemple $ET_2$ et $ET_3$, associées respectivement aux sorties sX et sZ de l'un des générateurs de symboles, GH, sont ouvertes simultanément, pour chaque générateur de symbole l'un après l'autre, de telle façon que, au cours d'un tel cycle, les différents symboles $X_1$-$X_2$-$Z_1$, O'x et sa graduation, $A_0$-$A_1$-$A_2$, $Q_1$Q_2$, $I_1$-$I_2$, β, $P_1$-$P_4$, $M_1$-$M_2$, ainsi que les informations alpha-numériques − 2.7 et 650 (figure 3), DH 60 DH (figure 6), sont affichés successivement sur l'écran E, mais restent simultanément visibles pendant cette durée T, en raison de la rémanence dudit écran E. Bien entendu, la remise à jour de l'affichage a lieu au cours des cycles suivants de l'horloge électronique HE.

On va décrire ci-après le mode de fonctionnement et d'utilisation du dispositif d'assistance selon la présente invention, qui vient d'être décrit, dans le cas d'un vol d'approche et d'atterrissage sur une piste équipée du système I.L.S. :

Pendant le vol d'approche, avant que le récepteur I.L.S. de l'avion ne reçoive les signaux émanant de la piste, la fenêtre de centre F est utilisée pour assurer un guidage de faible précision, notamment en route et en altitude ; ladite fenêtre est alors affichée avec des côtés ouverts, comme indiqué en a sur la figure 4. Dès que par exemple le signal « localizer » est reçu par le récepteur I.L.S. de l'avion, avec une intensité suffisante, la fenêtre assure le guidage suivant le faisceau du « localizer » ; les deux côtés verticaux de la fenêtre affichée sont alors complets comme indiqué sur la figure 4, en b ; si c'est au contraire le signal « glide » qui est reçu le premier avec une intensité suffisante, la fenêtre assure alors le guidage en « glide slope », et ce sont les deux côtés horizontaux de la fenêtre affichée qui sont alors complets, comme visible sur la figure 4, en c. Lorsque les deux signaux « localizer » et « glide » sont reçus simultanément par le récepteur I.L.S., la fenêtre de centre F, qui assure alors le guidage de l'atterrissage en I.L.S., est affichée sous la forme d'un rectangle à côtés non interrompus, comme visible sur la figure 4, en d. C'est cette phase, correspondant à l'atterrissage proprement dit, qui va maintenant être décrite de façon détaillée.

Pour mettre à profit l'assistance à l'atterrissage que lui assure alors le dispositif selon la présente invention, précédemment décrit, le pilote de l'avion doit s'efforcer d'amener le symbole avion $A_0$, et de le maintenir dans la fenêtre de guidage de centre F, dont la position sur l'écran E évolue évidemment au cours du vol ; cette fenêtre, dont les côtés restent constamment les uns parallèles, et les autres perpendiculaires à l'horizon mobile O'x, correspond en effet, sensiblement à la section, par le plan transversal fixe de l'avion, XOZ, d'un faisceau de guidage émanant du point d'impact idéal G, sur l'axe β de la piste, les dimensions transversales, a et b, de ce faisceau étant prédéterminées pour correspondre aux valeurs limites acceptables des écarts ΔL et ΔG. La fenêtre se déplace donc en même temps que l'avion par rapport à la piste, de même que son orientation dépend de celle de l'horizon mobile O'x, c'est-à-dire en définitive de l'inclinaison latérale, φ, de l'avion ; ce n'est pas le cas, par contre, des deux repères A1-A2, qui encadrent le symbole de l'avion $A_0$, et qui, eux, sont toujours parallèles à l'axe fixe OX, ou axe de tangage de l'avion. Bien entendu, c'est en agissant sur les gouvernes de l'avion, au moyen des organes de commande placés à sa portée, que le pilote s'efforce de maintenir le symbole $A_0$ à l'intérieur de la

8

fenêtre de guidage ; ces manœuvres sont cependant peu contraignantes, dans la mesure notamment où il n'est pas obligatoire d'amener le symbole de l'avion, $A_o$, exactement au centre F de la fenêtre, comme c'est le cas avec les dispositifs d'assistance antérieurement connus, où l'élément de guidage est matérialisé par un point, généralement le point de croisement de deux traits. En d'autres termes, le dispositif d'assistance selon la présente invention autorise un guidage suffisamment précis tant que le symbole de l'avion $A_o$ est à l'intérieur de la fenêtre, même à proximité de l'un de ses côtés ; bien entendu, pour obtenir un guidage le plus précis possible, le pilote s'efforce de réduire la distance entre le symbole de l'avion $A_o$ et le centre F de la fenêtre.

D'autre part, pour que l'avion conserve la vitesse choisie $V_R + \Delta V_R$, le pilote doit s'efforcer, à tout instant, d'amener les symboles de pente potentielle $Q_1$, $Q_2$ au niveau des symboles d'incidence $I_1$, $I_2$. Il parvient à ce résultat en manipulant la manette des gaz qui commande la poussée des réacteurs ou les moteurs à hélices de l'avion.

La figure 6 correspond à la situation idéale, dans laquelle, en manœuvrant les gouvernes de l'avion et la manette des gaz, le pilote est parvenu, d'une part, à placer le symbole de l'avion au centre de la fenêtre rectangulaire de guidage, et d'autre part, à placer les deux paires de symboles de pente potentielle et d'incidence exactement les uns dans les autres, et au niveau du symbole de l'avion. Dans ce cas, en effet, $\gamma_P = \gamma_S$, d'où découle la constance de la vitesse $V_S$ de l'avion par rapport au sol ; d'autre part, $\alpha = \alpha_C$, c'est-à-dire que l'incidence de l'avion est égale à sa valeur de consigne, correspondant à la vitesse de référence $V_R$, éventuellement corrigée de l'écart $\Delta V_R$, pour tenir compte de la vitesse du vent, comme on l'a expliqué précédemment.

Il convient d'insister ici sur l'intérêt que présente, pour l'assistance au pilotage, l'emploi selon la présente invention, des symboles de pente potentielle tels que $Q_1$, $Q_2$, et des symboles d'incidence tels que $I_1$, $I_2$, en combinaison avec le symbole avion de coordonnées $\delta$ et $\gamma_S$. Comme on l'a vu précédemment, dans le cas illustré sur la figure 6, le pilote lit immédiatement sur l'écran E que l'avion vole à vitesse constante — puisque $\gamma_P = \gamma_S$, donc $dV_S/dt = O$ — et avec une altitude décroissante ($\gamma_S$ étant négatif). En vol horizontal, la vitesse est également constante, le symbole avion $A_o$ et les symboles de pente potentielle, $Q_1$, $Q_2$, étant alors alignés sur l'horizon mobile $O'x$. Si, dans le même cas, de vol à altitude constante — le symbole $A_o$ de l'avion étant sur la ligne d'horizon $O'x$ — les symboles $Q_1$, $Q_2$ se trouvaient en dessous de cette ligne d'horizon, le pilote en déduirait que la vitesse de l'avion diminue (puisque $\gamma_S = O$ et $\gamma_P = (dV_S/dt)/g$ négative). Dans le cas inverse, où les symboles de pente potentielle, $Q_1$ et $Q_2$ sont alignés sur la ligne d'horizon, au-dessus de laquelle se trouve le symbole de l'avion $A_o$, le pilote en déduit que l'altitude de l'avion augmente — puisque $\gamma_S$ est positif —, tandis que la vitesse de l'avion décroît avec une accélération négative $dV_S/dt = - g \cdot \gamma_S$. Chaque fois que le pilote constate que les symboles d'incidence $I_1$-$I_2$ se trouvent au niveau du symbole de l'avion $A_o$, il peut en déduire que l'incidence de l'avion a la valeur de consigne $\alpha_C$ correspondant à la vitesse de référence $V_R$ choisie, corrigée éventuellement de l'écart nécessaire pour tenir compte de la vitesse du vent. Si par contre les symboles d'incidence $I_1$-$I_2$ sont affichés en dessous du symbole de l'avion $A_o$, c'est que l'incidence instantanée $\alpha$ est inférieure à l'incidence de consigne $\alpha_C$, et que, par suite, la vitesse de l'avion est supérieure à la vitesse de référence choisie. C'est l'inverse si le symbole d'incidence $I_1$-$I_2$ est affiché au-dessus du symbole de l'avion $A_o$.

Si, par contre, le pilote ne parvient pas à maintenir le symbole de l'avion $A_o$ entièrement à l'intérieur de la fenêtre de guidage de centre F, comme illustré sur la figure 5, l'avion s'écarte de la trajectoire de consigne correspondant à l'atterrissage I.L.S., si bien que le point d'impact idéal, G, sur l'axe de la piste sort également de la fenêtre de guidage. Dans ce cas, des moyens auxiliaires, qui n'ont pas été représentés sur les figures 2A-2B, mais qui peuvent comporter essentiellement des circuits à seuil recevant les signaux de sortie $\Delta L$ et $\Delta G$ du récepteur I.L.S., font apparaître des signaux d'alarme à l'extérieur et à proximité des côtés de la fenêtre les plus proches du point G, par exemple sous la forme de triangles $T_1$, dont la base est parallèle à la ligne d'horizon et le sommet opposé proche du milieu du côté inférieur de la fenêtre, et $T_2$, dont la base est perpendiculaire à la ligne d'horizon, et le sommet opposé proche du milieu du côté gauche de la fenêtre ; l'attention du pilote sur ces signaux d'alarme peut être attirée en les affichant en tireté et/ou avec un clignotement de fréquence appropriée. La figure 5 montre également que si l'incidence de l'avion devient trop élevée, et, par suite, sa vitesse par rapport au sol, trop faible, les symboles d'incidence $I_1$-$I_2$, qui sont alors très proches de la ligne d'horizon, peuvent être affichés en tireté et/ou avec un clignotement de fréquence appropriée.

Lorsque la hauteur altimétrique H de l'avion devient égale à soixante pieds, le générateur alpha-numérique fait apparaître sur l'écran E l'indication DH 60 DH en dessous de la fenêtre de guidage, comme visible sur la figure 6. C'est alors que le pilote doit prendre la décision de poursuivre la procédure d'atterrissage, seulement si sont satisfaites toutes les conditions illustrées sur cette figure 6 : non seulement les symboles de pente potentielle et d'incidence doivent être alignés avec le symbole de l'avion, lui-même situé à l'intérieur de la fenêtre de guidage, mais en outre celle-ci doit être centrée le plus près possible de l'axe $\beta$ de la piste ; si l'une au moins de ces conditions n'est pas satisfaite, le pilote doit renoncer à la procédure d'atterrissage et remettre les gaz. Lorsque l'avion est parvenu à la hauteur de vingt-cinq pieds (figure 7), le générateur de fenêtre GF, influencé directement par l'information H en provenance du radio-altimètre, réduit la hauteur de ladite fenêtre, comme visible sur la figure 4, en e, et sur la figure 7. De nouvelles réductions de hauteur de la fenêtre se produisent ensuite, par exemple aux

# 0 044 777

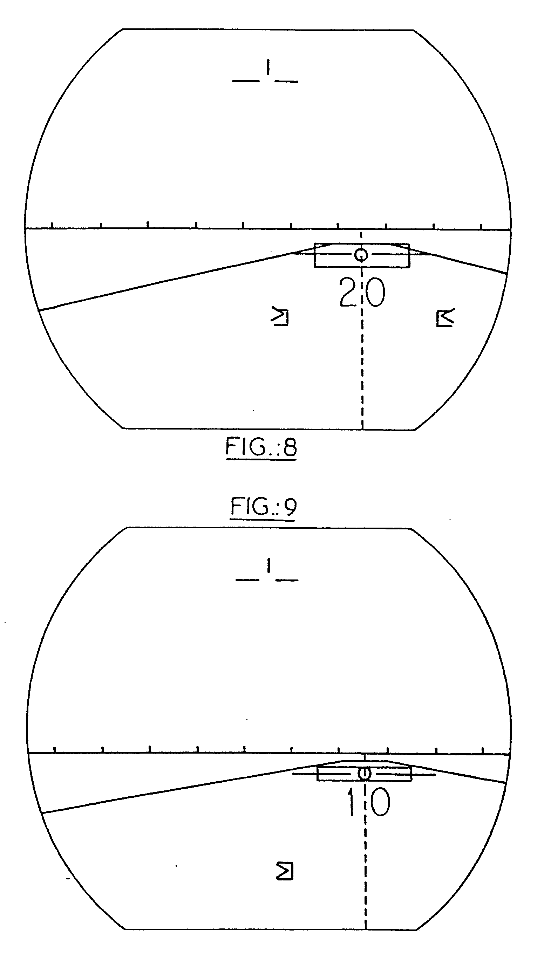

altitudes de vingt pieds (figure 8) et de dix pieds (figure 9). Les figures 6 à 9 montrent clairement l'évolution de la forme de l'image de la piste d'atterrissage au fur et à mesure que l'avion s'en rapproche dans un plan vertical, passant par son axe et perpendiculaire à l'horizon (en l'absence de roulis de l'avion).

Lorsque la hauteur radio-altimétrique, H, de l'avion devient inférieure à une hauteur prédéterminée, $H_A$, à partir de laquelle sa trajectoire cesse d'être rectiligne pour amorcer un arrondi aboutissant à un point d'impact sur l'axe de la piste, la sortie du circuit à seuil $S_1$, qui est alors activée, transmet, par l'intermédiaire d'un circuit de conformation $CP_4$, un signal approprié à l'entrée e du générateur de symbole d'incidence, GI, rendant la position des symboles d'incidence $I_1$-$I_2$ indépendante de l'écart d'incidence $\Delta\alpha$, si bien que ces symboles restent ensuite fixes par rapport aux repères fixes $X_1$-$X_2$-$Z_1$ ; le même signal est aussi utilisé pour commander une réduction de la poussée des moteurs de l'avion.

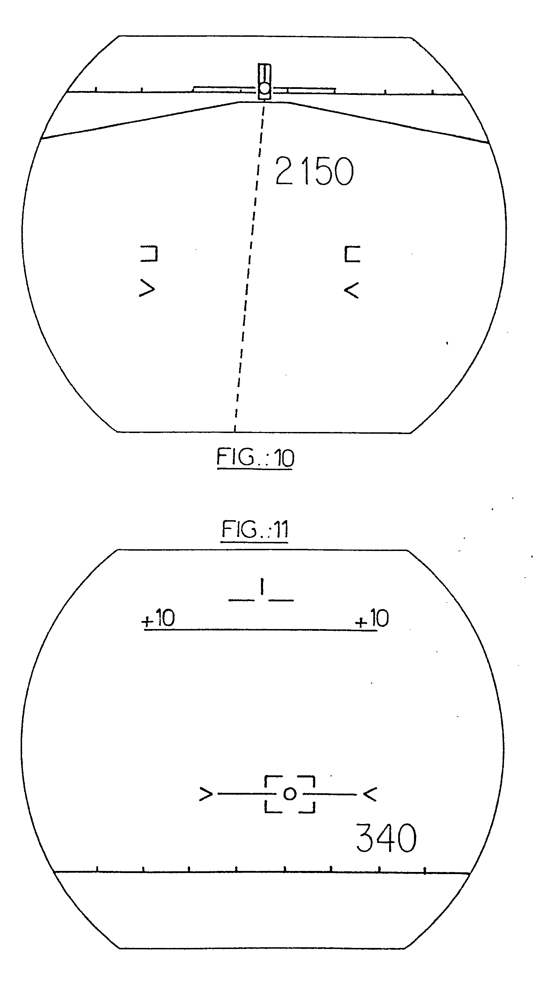

Lorsque les roues de l'avion touchent le sol, le générateur de fenêtre GF modifie complètement la forme de la fenêtre affichée, qui devient plus haute que large, comme visible sur la figure 4 en h, ainsi que sur la figure 10. Le signal $\Delta L$ produit par le récepteur I.L.S. de l'avion, est ensuite utilisé pour assurer le guidage de l'avion roulant suivant l'axe β de la piste ; en même temps, le générateur alpha-numérique GAN affiche la longueur restante de la piste (par exemple 2 150 mètres sur la figure 10), à partir de l'information RWL que ledit générateur GAN reçoit par une entrée e.

La figure 11 montre l'affichage que voit le pilote lorsque, parvenu à la hauteur de décision DH, il renonce à poursuivre la procédure d'atterrissage et actionne le commutateur de remise des gaz ou « palm switch ». Dans ce cas, les côtés de la fenêtre de guidage sont ouverts, ce qui correspond à un guidage de faible précision en route et en altitude, le pilote s'efforçant de maintenir le symbole de l'avion au niveau du centre de ladite fenêtre, de même que les symboles de pente potentielle ; le simple examen de l'affichage illustré sur la figure 11 montre au pilote que l'avion est alors en vol ascendant à vitesse constante, à l'altitude radio-altimétrique H = 340 pieds.

Comme on l'a déjà indiqué, le tube à faisceau cathodique 1, servant d'élément d'affichage dans la forme de réalisation précédemment décrite, est placé dans le poste de pilotage ; de préférence, des moyens optiques connus sont prévus pour projeter son écran E devant les yeux du pilote, dans une position telle que la ligne d'horizon mobile O'x, ainsi que l'image évolutive de la piste, $P_1$-$P_4$, coïncident sensiblement avec l'horizon et avec la piste que le pilote voit à travers le pare-brise de l'avion. De cette façon, en cas notamment de visibilité normale, le pilote n'a pas à distraire son attention de l'environnement visible à travers le pare-brise pour surveiller, aussi fréquemment que possible, les évolutions des informations affichées sur l'écran E, puisque ces informations sont projetées en superposition avec l'environnement visible : ceci autorise donc le « pilotage tête haute ».

La présente invention n'est pas limitée à la forme de réalisation précédemment décrite. C'est ainsi, par exemple, que le tube d'affichage 1 peut comporter plusieurs faisceaux d'électrons, dont chacun est affecté respectivement à l'affichage de plusieurs des symboles précédemment décrits. Le tube à faisceau cathodique lui-même peut être d'autre part remplacé par tout élément approprié d'affichage, telle qu'une matrice de diodes électro-luminescentes, ou tout autre élément plan d'affichage. Bien entendu, il est possible d'utiliser un élément d'affichage en couleur, permettant d'afficher les différents symboles prévus avec des couleurs différentes. La forme et les dimensions des différents symboles, visibles par exemple sur la figure 3, sont matières à option. Certains d'entre-eux sont facultatifs. Il en va de même pour les différentes informations alpha-numériques qui sont affichées. La prise en compte de l'inclinaison longitudinale θ de l'avion sur l'écran d'affichage E est facultative ; en son absence, la ligne mobile d'horizon O'x pivote autour du point de convergence O des repères $X_1$-$X_2$ et $Z_1$. Il est également possible de renoncer à l'affichage de l'inclinaison transversale, ou angle de roulis φ de l'avion ; dans ce cas, la ligne d'horizon O'x deviendrait fixe et coïnciderait avec l'axe fixe OX (figure 3). Dans le cas d'un avion ne comportant pas de centrale d'inertie, des circuits connus peuvent être cependant prévus pour calculer les composantes suivant l'axe de tangage et l'axe de lacet, de la vitesse de l'avion par rapport au sol. Bien entendu, le dispositif selon la présente invention peut être monté sur un véhicule aérien quelconque, pour assister son pilotage ; il peut aussi être monté dans un simulateur de pilotage.

**Revendications**

1. Dispositif d'assistance au pilotage, ou à la simulation du pilotage, d'un véhicule aérien, notamment d'un avion, monté sur ledit véhicule aérien, comportant un élément d'affichage (1) avec écran d'affichage et des moyens de génération de symboles pour y faire apparaître des symboles représentatifs de certaines caractéristiques du vol de l'avion et de son environnement, ces moyens de génération de symboles comportant des moyens (GA) pour faire apparaître un symbole ($A_o$) caractéristique du véhicule aérien près d'un point (A) de l'écran d'affichage (E), caractérisé en ce que lesdits moyens pour faire apparaître le symbole caractéristique du véhicule aérien sont tels que l'abscisse (x) et l'ordonnée (z) dudit point (A) par rapport à deux axes rectangulaires (O'x, O'z) sont respectivement proportionnelles à la dérive, δ, et à la pente par rapport au sol, $\gamma_S$, de la trajectoire du véhicule aérien, δ et $\gamma_S$ étant fournies par un générateur de δ et $\gamma_S$ (CI) monté sur le véhicule aérien, les moyens de génération de symboles comportant en outre des moyens (GF) pour faire apparaître un symbole (F) de guidage de la trajectoire du véhicule aérien.

2. Dispositif selon la revendication 1, caractérisé en ce que le symbole de guidage a la forme d'une fenêtre (F) rectangulaire à côtés respectivement parallèles auxdits axes rectangulaires (O'x, O'z).

3. Dispositif selon la revendication 1 ou 2, caractérisé en ce que lesdits moyens de génération de symboles comportent en outre des moyens (GI, GP) pour faire apparaître au voisinage du symbole (A₀) du véhicule aérien, un symbole d'incidence, dont la différence d'ordonnée, par rapport auxdits axes rectangulaires, avec le symbole (A₀) de l'avion est égale à $K \cdot \Delta\alpha$, K étant un coefficient de proportionnalité et $\Delta\alpha$ l'écart entre l'incidence de l'avion et l'incidence correspondant à la vitesse de référence choisie, et au moins un symbole de pente potentielle, dont l'ordonnée par rapport auxdits axes rectangulaires est proportionnelle à $\gamma_P = \gamma_S (1/g) \cdot (dVs/dt)$, g étant l'intensité de la pesanteur et $V_S$ étant la vitesse de l'avion par rapport au sol.

4. Dispositif selon la revendication 2 ou 3, caractérisé en ce que le coefficient de proportionnalité K est lui-même variable, de façon à augmenter avec $\Delta\alpha$, tout au moins au-dessus d'une certaine valeur de $\Delta\alpha$.

5. Dispositif selon l'une quelconque des revendications 3 et 4, caractérisé en ce qu'il comporte en outre des circuits (AD₁, MU₁, AD₂, MU₂) pour calculer la pente potentielle $\gamma_p$ par l'équation $\gamma_P = [J_z (\theta - \gamma_S) + J_x]/g$, l'inclinaison longitudinale du véhicule aérien $\theta$ ainsi que les composantes horizontales, $J_x$, et verticale, $J_z$, de l'accélération de l'avion, étant fournies par un générateur de $\theta$, $J_x$ et $J_z$ (CI) monté sur le véhicule aérien.

6. Dispositif selon la revendication 5, caractérisé en ce que lesdits moyens de génération de symboles comportent en outre des moyens pour afficher des repères fixes (X₁-X₂, Z₁) matérialisant respectivement les axes de tangage (OX) et de lacet (OZ) du véhicule aérien et des moyens (GH) tels que celui (O'x) desdits axes rectangulaires (O'x, O'z) qui correspond à l'axe des abscisses est affiché sous la forme d'une ligne mobile d'horizon (O'x), cette ligne mobile d'horizon (O'x), étant définie par le fait que sa pente avec l'axe de tangage (OX) est égale à l'inclinaison latérale $\varphi$ du véhicule aérien, et que sa distance, par rapport auxdits axes rectangulaires, au point de convergence (O) desdits repères fixes (X₁-X₂, Z₁) est proportionnelle à $\theta$.

7. Dispositif selon l'une quelconque des revendications 1 à 6, caractérisé en ce que lesdits moyens de génération de symboles comportent en outre des moyens (G-Pi) pour afficher une image (P₁-P₄) évolutive et réaliste d'une piste d'atterrissage, telle qu'elle serait vue par le pilote du véhicule aérien.

8. Dispositif selon les revendications 2, 6 et 7, utilisé pour l'assistance à l'atterrissage, ou à la simulation de l'atterrissage, du véhicule aérien sur une piste équipée d'un système I.L.S. ou d'un système équivalent, caractérisé en ce que lesdits moyens de génération de symboles comportent en outre des moyens (C₃, C₄) pour déterminer les coordonnées (X_G, Z_G), par rapport aux axes de tangage et de lacet, d'un point d'impact idéal (G) dudit véhicule aérien sur la piste, ainsi que des moyens (GLL) pour afficher en outre l'axe (β) de la piste, passant par ce point d'impact idéal (G), les moyens (GF) pour faire apparaître la fenêtre étant conçus de telle sorte que ladite fenêtre est affichée de part et d'autre d'un point central (F), dont les coordonnées, par rapport auxdits axes rectangulaires, diffèrent de celles, par rapport auxdits axes rectangulaires, du point d'impact idéal (G), de quantités respectivement proportionnelles à l'écart dit « localizer » (ΔL) et à l'écart dit « glide » (ΔG), fournis l'un et l'autre par un récepteur I.L.S. monté sur le véhicule aérien.

9. Dispositif suivant l'une quelconque des revendications 2 à 8, caractérisé en ce que lesdits moyens de génération de symboles comportent en outre des moyens pour modifier la forme et/ou les dimensions de la fenêtre de guidage affichée, en fonction de la phase actuelle du vol de l'avion.

10. Dispositif selon l'une quelconque des revendications 1 à 9, caractérisé en ce que l'élément d'affichage est un tube à faisceau cathodique (1).

11. Dispositif selon les revendications 6 et 7, caractérisé en ce que l'élément d'affichage (1) est placé au poste de pilotage, et que des moyens optiques sont prévus pour projeter son écran (E) à l'infini devant les yeux du pilote, dans une position telle que la ligne d'horizon mobile (O'x) et l'image évolutive (P₁-P₄) de la piste, coïncident sensiblement avec l'horizon et avec la piste que le pilote voit à travers le pare-brise de l'avion.

## Claims

1. A device to assist the piloting, or the simulation of piloting, of an aircraft, more particularly on aeroplane, mounted on said aircraft, comprising a display unit (1) having a display screen and symbol generating means to cause the appearance on the screen of symbols representative of certain characteristics of the aircraft's flight and of its environment, the symbol generating means comprising means (GA) for causing the appearance of a symbol (A) characteristic of the aircraft near to a point (A) on the display screen (E), characterised in that said means for causing the appearance of the symbol characteristic of the aircraft are such that the abscissa (x) and the ordinate (z) of the said point (A) relative to two rectangular axes (O'x, O'z) are respectively proportionate to the drift, δ, and to the slope relative to the ground, $\gamma_S$, of the trajectory of the aircraft, δ and $\gamma_S$ being supplied by a generator of δ and $\gamma_S$ (CI) mounted on the aircraft, the symbol generating means additionally comprising means (GF) for causing the appearance of a symbol (F) for guidance of the trajectory of the aircraft.

11

2. A device according to claim 1, characterised in that the guidance symbol has the form of a rectangular window (F) with sides parallel respectively to the said rectangular axes (O'x, O'z).

3. A device according to claim 1 or 2, characterised in that said symbol generating means comprise additionally means (GI, GP) for causing the appearance, in the vicinity of the symbol (A) of the aircraft, of a symbol of incidence, the difference in ordinate of which, relative to the said rectangular axes, from the symbol (A) of the aircraft, equals $K \cdot \Delta\alpha$, K being a coefficient of proportionality and $\Delta\alpha$ being the divergence between the incidence of the aeroplane and the incidence corresponding to the selected reference speed, and at least one symbol of potential slope, whose ordinate relative to the said rectangular axes is proportional to $\gamma_p = \gamma_s + (1/g) \cdot (dVs/dt)$, g being the intensity of gravity and $V_s$ being the ground speed of the aeroplane.

4. A device according to claim 2 or 3, characterised in that the coefficient of proportionality K is itself variable, in such a way as to increase with $\Delta\alpha$, at least above a certain value of $\Delta\alpha$.

5. A device according to one or other of claims 3 to 4, characterised in that it additionally comprises circuits ($AD_1$, $MU_1$, $AD_2$, $MU_2$) for calculating the potential slope $\gamma p$ by the equation $\gamma_P = [J_z(\theta - \gamma_S) + J_x]/g$, the longitudinal inclination of the aircraft $\theta$ as well as the horizontal ($J_x$) and vertical ($J_z$) components of the acceleration of the aircraft being supplied by a generator of $\theta$, $J_x$ and $J_z$ mounted on the aircraft.

6. A device according to claim 5, characterised in that said symbol generating means comprise additionally means for displaying fixed references ($X_1$-$X_2$, $Z_1$) indicating respectively the axes of pitch (OX) and of yaw (OZ) of the aircraft, and means (GH) such that one (O'x) of said rectangular axes (O'x, O'z) which corresponds to the x-axis is displayed in the form of a movable horizon line (O'x), this movable horizon line (O'x) being defined by the fact that its slope relative to the axis of pitch (OX) is equal to the lateral inclination $\gamma$ of the aircraft, and that its distance, relative to the said rectangular axes, from the point of convergence (O) of the said fixed references ($X_1$-$X_2$, $Z_1$) is proportional to $\theta$.

7. A device according to any one of claims 1 to 6, characterised in that said symbol generating means comprise additionally means (G-Pi) for displaying an evolutive and realistic image ($P_1$-$P_4$) of a landing strip, as it would be seen by the pilot of the aircraft.

8. A device according to claims 2, 6 and 7, for assisting the landing or the simulation of landing, of the aircraft on a runway equipped with an ILS system or equivalent, characterised in that said symbol generating means additionally comprise means ($C_3$, $C_4$) for determining the coordinates ($X_G$, $Z_G$), relative to the axes of pitch and yaw, of an ideal point of impact (G) of said aircraft on the runway, as well as means (GLL) for displaying additionally the axis ($\beta$) of the runway, passing through this ideal point of impact (G), the means (GF) for causing the appearance of the window being conceived in such a way that said window is displayed on both sides of a central point (F), whose coordinates, relative to said rectangular axes, differ from those, relative to said rectangular axes, of the ideal point of impact (G), by qualities respectively proportional to the divergence referred to as « localizer » ($\Delta L$) and to the divergence referred to as « glide » ($\Delta G$), both supplied by an ILS receiver mounted on the aircraft.

9. A device following any one of claims 2 to 8, characterised in that said symbol generating means comprise additionally means for modifying the form and/or the dimensions of the guidance window displayed, as a function of the current phase of flight of the aeroplane.

10. A device according to any one of claims 1 to 9, characterised in that the display unit is a cathode ray tube (1).

11. A device according to claims 6 and 7, characterised in that the display unit (1) is located at the pilot's position and that optical means are provided to project its screen (E) to infinity before the eyes of the pilot, in such a position that the movable horizon line (O'x) and the evolutive image ($P_1$-$P_4$) of the runway coincide perceptibly with the horizon and with the runway wich the pilot sees through the windshield of the aeroplane.

## Ansprüche

1. Hilfsvorrichtung zur Steuerung oder zur Simulation der Steuerung eines Luftfahrzeugs, insbesondere eines Flugzeugs, die auf dem genannten Luftfahrzeug gelagert ist und ein Anzeigeelement (1) mit einem Anzeigeschirm und Mittel zur Erzeugung von Zeichen enthält, um dort Zeichen erscheinen zu lassen, die für bestimmte Charakteristika des Flugs des Flugzeugs und seiner Umgebung repräsentativ sind, wobei diese Mittel zur Erzeugung von Zeichen Mittel (GA) enthalten, um ein für das Luftfahrzeug charakteristisches Zeichen ($A_o$) in der Nähe eines Punktes (A) des Anzeigeschirms (E) erscheinen zu lassen, dadurch gekennzeichnet, daß die genannten Mittel zur Darstellung des für das Luftfahrzeug charakteristischen Zeichens derart sind, daß die Abszisse (x) und die Ordinate (z) des genannten Punktes (A) mit Bezug auf die beiden im rechten Winkel liegenden Achsen (O'x, O'z) jeweils proportional zu der Abtrift $\delta$ und der Neigung der Flugbahn des Luftfahrzeugs mit Bezug auf den Boden $\gamma_S$ sind, wobei $\delta$ und $\gamma_S$ herangeführt werden durch einen Generator für $\delta$ und $\gamma_S$ (CI), der auf dem Luftfahrzeug gelagert ist, und wobei die Einrichtungen zur Erzeugung der Zeichen außerdem Einrichtungen (GF) zur Darstellung eines Führungszeichens (F) der Flugbahn des Luftfahrzeugs enthalten.

2. Vorrichtung nach Anspruch 1, dadurch gekennzeichnet, daß das Führungszeichen die Form eines rechteckigen Fensters (F) mit jeweils zu den genannten rechtwinklig angeordneten Achsen (O'x, O'z) parallelen Seiten hat.

3. Vorrichtung nach Anspruch 1, dadurch gekennzeichnet, daß die genannten Mittel zur Erzeugung der Zeichen außerdem Mittel (GI, GP) zur Anzeige eines Einfallszeichens in der Nähe des Zeichens ($A_o$) des Luftfahrzeugs enthalten, dessen Koordinatendifferenz mit Bezug auf die genannten rechtwinkligen Achsen bei dem Zeichen ($A_o$) des Flugzeugs gleich $K \cdot \Delta\alpha$ ist, wobei K ein Koeffizient der Proportionalität und $\Delta\alpha$ die Abweichung zwischen dem Einfall des Flugzeugs und dem Einfall entsprechend der gewählten Bezugsgeschwindigkeit ist, und wenigstens eines Zeichens der möglichen Neigung, dessen Koordinate mit Bezug auf die genannten im rechten Winkel liegenden Achsen proportional zu $\gamma_p = \gamma_s + (1/g) \cdot (dV_s/dt)$ ist, wobei g die Intensität der Erdbeschleunigung und $V_s$ die Geschwindigkeit des Flugzeugs über Grund ist.

4. Vorrichtung nach Anspruch 2 oder 3, dadurch gekennzeichnet, daß der Koeffizient der Proportionalität K selbst derart variabel ist, daß er mit $\Delta\alpha$ zunimmt, wenigstens über einem bestimmten Wert von $\Delta\alpha$.

5. Vorrichtung nach jedem der Ansprüche 3 und 4, dadurch gekennzeichnet, daß sie außerdem Schaltkreise ($AD_1$, $MU_1$, $AD_2$, $MU_2$) enthält zur Berechnung der möglichen Neigung $\gamma_p$ durch die Gleichung $\gamma_p = [J_z (\theta - \gamma_s) + J_x]/g$, wobei die Längsneigung des Luftfahrzeugs $\theta$ sowie die waagerechte Komponente $J_x$ und die senkrechte Komponente $J_z$ der Beschleunigung des Flugzeugs durch einen auf dem Luftfahrzeug gelagerten Generator für $\theta$, $J_x$ und $J_z$ (CI) gegeben sind.

6. Vorrichtung nach Anspruch 5, dadurch gekennzeichnet, daß die genannten Mittel zur Erzeugung der Zeichen außerdem Mittel zur Darstellung der festen Zeichen ($X_1$-$X_2$, $Z_1$) enthalten, welche jeweils die Distanzachsen (OX) und die Schleifenachsen (OZ) des Luftfahrzeugs darstellen, sowie Mittel (GH) wie dasjenige (O'x) der genannten rechtwinkligen Achsen (O'x, O'z), welches der Achse der Abszissen entspricht und in Form einer beweglichen Horizontlinie (O'x) dargestellt wird, wobei diese bewegliche Horizontlinie (O'x) dadurch definiert ist, daß ihre Neigung bei der Stampfachse (OX) gleich der seitlichen Neigung $\varphi$ des Luftfahrzeugs ist und ihr Abstand mit Bezug auf die genannten im rechten Winkel liegenden Achsen am Konvergenzpunkt (O) der genannten festen Zeichen ($X_1$-$X_2$, Z1) proportional zu $\theta$ ist.

7. Vorrichtung nach jedem der Ansprüche 1-6, dadurch gekennzeichnet, daß die genannten Mittel zur Erzeugung der Zeichen außerdem Mittel (G-Pi) zur Darstellung eines realistischen Evolutionsbildes ($P_1$-$P_4$) von einer Landungsbahn enthält, wie sie von dem Piloten des Luftfahrzeugs gesehen würde.

8. Vorrichtung nach Anspruch 2, 6 und 7 zur Verwendung als Landungshilfe oder zur Simulation der Landung eines Luftfahrzeugs auf einer mit einem I.L.S.-System oder einem äquivalenten System ausgestatteten Piste, dadurch gekennzeichnet, daß die genannten Mittel zur Erzeugung der Zeichen außerdem Mittel ($C_3$, $C_4$) aufweisen zur Bestimmung der Koordinaten ($X_G$, $Z_G$) mit Bezug auf die Stampfachsen und Schleifenachsen von einem idealen Aufschlagpunkt (G) des genannten Luftfahrzeugs auf der Piste sowie Mittel (GLL) zur Anzeige außerdem der Achse ($\beta$) der Piste, die durch den idealen Aufschlagpunkt (G) hindurchgeht, wobei die Mittel (GF) zur Darstellung des Fensters so ausgelegt sind, daß das genannte Fenster zu beiden Seiten des Mittelpunktes (F) dargestellt wird, dessen Koordinaten mit Bezug auf die genannten im rechten Winkel liegenden Achsen von denjenigen des idealen Aufschlagpunktes (G) mit Bezug auf die genannten im rechten Winkel liegenden Achsen um Beträge jeweils proportional zu der als « localizer » ($\Delta L$) bezeichneten Abweichung und der als « glide » bezeichneten Abweichung ($\Delta G$) abweichen, die beide durch einen auf dem Luftfahrzeug gelagerten I.L.S.-Empfänger herangeführt werden.

9. Vorrichtung nach jedem der Ansprüche 2 bis 8, dadurch gekennzeichnet, daß die genannten Mittel zur Erzeugung der Zeichen außerdem Mittel zur Modifikation der Form und/oder der Dimensionen des dargestellten Führungsfensters als Funktion der jeweiligen Flugphase des Flugzeugs enthalten.

10. Vorrichtung nach jedem der Ansprüche 1 bis 9, dadurch gekennzeichnet, daß das Anzeigeelement eine Kathodenstrahlröhre (1) ist.

11. Vorrichtung nach den Ansprüchen 6 und 7, dadurch gekennzeichnet, daß das Anzeigeelement (1) am Führerstand angeordnet ist und optische Mittel vorgesehen sind, um seinen Schirm (E) vor den Augen des Piloten ins Unendliche in eine solche Lage zu projizieren, daß die bewegliche Horizontlinie (O'x) und das Evolutionsbild ($P_1$-$P_4$) der Piste im wesentlichen mit dem Horizont und mit der Piste zusammenfallen, die der Pilot durch die Windschutzscheibe des Flugzeugs sieht.

FIG.:1

FIG.:4

0 044 777

**0 044 777**

FIG.: 2A

FIG.: 2B

0 044 777

FIG.: 3

0 044 777

FIG.:5

FIG.:6

FIG.:7

FIG.:8

FIG.:9

2150

FIG.: 10

FIG.: 11

+10          +10

>—[ o ]—<

340

8